# EUROPÄISCHE PATENTSCHRIFT

(11) **EP 3 176 499 B1**
(45) Veröffentlichungstag und Bekanntmachung des Hinweises auf die Patenterteilung: **02.05.2018**
(21) Anmeldenummer: 16201026.8
(22) Anmeldetag: 29.11.2016
(51) Int. Cl.: F21V 8/00, F21V 17/10, F21V 17/16, F21V 19/00, F21S 8/04, F21Y 105/14, F21Y 115/10

(54) **LEUCHTE**
LUMINAIRE
LUMINAIRE

(30) Priorität: 03.12.2015 DE 202015106600 U
(43) Veröffentlichungstag der Anmeldung: 07.06.2017
(73) Patentinhaber: Zumtobel Lighting GmbH, 32657 Lemgo (DE)
(72) Erfinder: HILDEBRAND, Benjamin, 32791 Lage (DE)
(74) Vertreter: Kiwit, Benedikt

(56) Entgegenhaltungen:
- CN-A- 104 315 390
- DE-A1-102005 027 261
- DE-U1-202015 105 133

## Beschreibung

Die vorliegende Erfindung betrifft eine Leuchte insbesondere mit Edge-Lit Technologie.

Derartige Leuchten sind grundsätzlich aus dem Stand der Technik bekannt. Solche Leuchten weisen in der Regel eine (strukturierte) Lichtleitplatte auf, welche mit wenigstens teilweise umlaufend um ihre Stirnseite verteilt angeordneten Leuchtmitteln (in der Regel LEDs) versehen ist. Die LEDs strahlen in die Leichtleitplatte derart seitlich ein, um dann über eine (oder auch beide) der flächigen Seiten der Lichtleitplatte das Licht als Direkt- und/oder Indirektbeleuchtung abzugeben. Die Leuchtmittel sind in der Regel in einem die Lichtleitplatte seitlich umgebenden Gehäuse gehalten. Die Lichtleitplatte ist im Gehäuse, welches beispielsweise als Druckguss-Aluminium-Gehäuse hergestellt ist, in einer Art und Weise aufzunehmen, dass die Lichtleitplatte mit ihrer Stirnseite umlaufend von den Leuchtmitteln, hier insbesondere LEDs, auf Abstand gehalten wird, um die Leuchtmittel nicht zu beschädigen. Das Aufnehmen, Zentrieren und Halten der Lichtleitplatte bezüglich ihres Gehäuses - insbesondere bezüglich der LEDs - wird in der Regel durch mehrere Bauteile umgesetzt, welche aufwendig in einer definierten Weise zueinander im Gehäuse positioniert, geschraubt oder eingeclipst werden müssen.

CN 104 315 390 A offenbart eine Leuchte, bestehend aus einer Rückenplatte, einem Rahmen und einer in dem Rahmen angeordneten Lichtleitplatte, in die Licht, das von LEDs an zwei sich gegenüberliegenden Seiten der Lichtleitplatte ausgesandt wird, eintreten kann. An diesen gegenüberliegenden Seiten sind ferner lichtblockierende Teile befestigt. Jedes der beiden lichtblockierenden Teile ist mit einer T-förmigen Rille zur Befestigung von LEDs und Lichtleitplatte ausgestattet. Weiterhin ist an dem lichtblockierenden Teil ein Vorsprung vorgesehen, der zur Sicherung des Abstands zwischen der Lichtleitplatte und den LEDs dient.

Es ist somit eine Aufgabe der vorliegenden Erfindung, eine eingangs genannte Leuchte bereitzustellen, bei der auf einfache Weise eine Lichtleitplatte in gewünschter Weise sicher beabstandet zu den sie umgebenden Leuchtmitteln positioniert werden kann.

Diese Aufgabe wird durch den Gegenstand der unabhängigen Ansprüche gelöst. Die abhängigen Ansprüche bilden den zentralen Gedanken der Erfindung in besonders vorteilhafter Weise weiter.

Die Erfindung betrifft eine Leuchte aufweisend eine Lichtleitplatte mit einer seitlich umlaufenden Stirnseite, ein wenigstens stirnseitig die Lichtleitplatte umgebendes Leuchtengehäuse (im Folgenden auch als Gehäuse bezeichnet), zwischen der Stirnseite und dem Leuchtengehäuse vorgesehene Leuchtmittel zur Einkopplung von Licht in die Lichtleitplatte, und einen ringförmigen Tragrahmen, welcher die Lichtleitplatte an dem Gehäuse hält, wobei der Tragrahmen ein Abstandselement aufweist, um die Lichtleitplatte bezüglich aller Leuchtmittel stirnseitig beabstandet zu positionieren. Ferner weist der Tragrahmen ein Anlageelement auf, um die Leuchtmittel seitlich an das Gehäuse zu drücken bzw. in Richtung des Gehäuses vorzuspannen.

Mittels der erfindungsgemäßen Leuchte wird es somit auf einfache Weise ermöglicht, durch das mit den Tragrahmen integral ausgebildete Abstandselement gleichzeitig die Lichtleitplatte an dem Gehäuse zu halten und bezüglich der Leuchtmittel definiert zu positionieren; insbesondere mit einem Abstand zu den Leuchtmitteln zu positionieren, um eine Beschädigung der Leuchtmittel sicher zu vermeiden.

In einer bevorzugten Ausgestaltungsform ist das Abstandselement umlaufend, vorzugsweise geschlossen umlaufend vorgesehen. Auf diese Weise kann sichergestellt werden, dass über den gesamten Umfang der Lichtleitplatte ein definierten Abstand zum Gehäuse und somit auch ein entsprechend definierter Abstand zu den vorgesehenen Leuchtmitteln eingehalten bzw. bereitgestellt wird. Während 'umlaufend' allein auch eine geschlitzte oder segmentartige Ausgestaltung umfassen kann, bedeutet ,geschlossen umlaufend' eine in Umfangsrichtung gesehen nichtoffene Struktur (bspw. eine ringartige Form)
Gemäß einer besonders bevorzugten Ausgestaltungsform ist das Abstandselement ferner derart ausgebildet, um die Lichtleitplatte bezüglich des Leuchtengehäuses umlaufend zu zentrieren. Unter ,umlaufender Zentrierung' wird erfindungsgemäß verstanden, dass die Lichtleitplatte in ihrer Erstreckungsebene gesehen seitlich bevorzugt rings umlaufend einen definierten, bevorzugt gleichen Abstand zum Leuchtengehäuse aufweist. Hierdurch kann nicht nur sichergestellt werden, dass die Lichtleitplatte von allen Leuchtmitteln beabstandet vorgesehen ist. Zudem kann ferner das Erscheinungsbild der Leuchte selbst gesteigert werden, indem die Bauteile definiert zueinander symmetrisch ausgerichtet sind.

Gemäß einer bevorzugten Ausgestaltungsform sind die Leuchtmittel an dem Gehäuse selbst vorgesehen bzw. befestigt, vorzugsweise an der der Stirnseite zugewandten Seite des Gehäuses. Folglich befinden sich die Leuchtmittel in einem Spalt, welcher durch die Stirnseite der Lichtleitplatte sowie das entsprechend gegenüberliegend positionierte Leuchtengehäuse bzw. dessen entsprechende Seite bereitgestellt ist. Bevorzugt sind die Leuchtmittel somit also in/an dem Leuchtengehäuse an definierten Positionen vorgesehen bzw. vorsehbar und entsprechend bezüglich des Leuchtengehäuses festlegbar.

Gemäß einer bevorzugten Ausgestaltungsform weist der Tragrahmen ein Anlageelement auf, um die Leuchtmittel tragenden Leuchtmodule, seitlich an das Gehäuse zu drücken bzw. in Richtung des Gehäuses vorzuspannen. Das/Die Anlageelement(e) ist/sind besonders bevorzugt derart ausgebildet, dass es/sie seitlich an dem Leuchtmodul anliegen und dieses folglich bevorzugt seitlich gegen das Gehäuse drückt/drücken, um dementsprechend die Leuchtmittel sicher in dem Gehäuse zu halten.

In einer bevorzugten Ausgestaltungsform ist das Abstandselement als Steg, insbesondere als (geschlossen) umlaufender Steg, ausgebildet. Ebenso kann auch das Anlageelement als Steg, insbesondere als (geschlossen) umlaufender Steg, ausgebildet sein.

Das Abstandselement und/oder das Anlageelement können sich in einen Spalt zwischen Stirnseite und Gehäuse, vorzugsweise zwischen Stirnseite und Leuchtmodul, erstrecken. Das Abstandselement liegt bevorzugt wenigstens seitlich an der Stirnseite der Lichtleitplatte an, um dieses entsprechend von den Leuchtmitteln beabstandet zu positionieren. Durch eine umlaufende Ausgestaltung oder wenigstens gleichmäßig umlaufend verteilte vorgesehene Abstandselemente kann somit eine sichere von den Leuchtmitteln beabstandete Positionierung der Lichtleitplatte und bevorzugt auch eine Zentrierung der Lichtleitplatte bezüglich des Leuchtengehäuses erzielt werden. Vergleichbar kann das Anlageelement bevorzugt wenigstens seitlich an dem Gehäuse - insbesondere der der Stirnseite gegenüberliegenden Seite des Gehäuses - und vorzugsweise seitlich an dem Leuchtmodul anliegen, um die Leuchtmittel auch bzgl. der Lichtleitplatte sicher beabstandet zu positionieren und bevorzugt an das Gehäuse zu drücken.

In einer besonders bevorzugten Ausgestaltungsform sind das Abstandselement sowie das Anlageelement integral miteinander ausgebildet, wobei sich diese dann bevorzugt zwischen der Stirnseite der Lichtleitplatte und der dieser Stirnseite gegenüberliegenden Seite des Gehäuses erstrecken und mit diesen beiden gegenüberliegenden Seiten bevorzugt in Anlage sind, um einerseits die Leuchtmittel an dem Gehäuse festzulegen und andererseits über diese Anlage des Gehäuses eine definierte Positionierung und vorzugsweise Zentrierung der Lichtleitplatte zu erzielen.

Gemäß einer bevorzugten Ausgestaltungsform weist der Tragrahmen einen seitlich (nach innen) vorstehenden und vorzugsweise umlaufend geschlossenen Tragsteg auf, welcher sich über einen äußeren flächigen Peripheriebereich der Lichtleitplatte derart erstreckt, um die Lichtleitplatte an/in dem Gehäuse zu halten; insbesondere in einer Richtung senkrecht zur Erstreckungsebene der Lichtleitplatte. Der Tragrahmen weist also einen nach innen und auf die Lichtleitplatte zu gerichteten bzw. vorstehenden Tragsteg auf. Der vorstehende Tragsteg ist dabei insbesondere flexibel ausgebildet, um die Lichtleitplatte senkrecht zur Erstreckungsebene der Lichtleitplatte an das Gehäuse zu drücken. Dabei befinden sich der vorstehende Tragsteg im verbundenen Zustand des Tragrahmens mit dem Leuchtengehäuse bei eingesetzter Lichtleitplatte in einer vorgespannten Position, um eben die Lichtleitplatte entsprechend auf das Gehäuse zu zu drücken und somit in Position zu halten. Die Lichtleitplatte wird dann folglich in Richtung senkrecht zur Erstreckungsebene der Lichtleitplatte auf das Gehäuse zu vorgespannt. In einer bevorzugten Ausgestaltung kann der Tragsteg auch umlaufend segmentiert aufgebaut sein, wobei die einzelnen Tragstegsegmente dann bevorzugt einzelne Federelemente bilden.

Gemäß einer besonders bevorzugten Ausgestaltungsform weist das Tragelement Rastvorsprünge auf, welche in korrespondierende Rastaufnahmen des Gehäuses eingreifen. Grundsätzlich ist selbstverständlich auch eine inverse Ausgestaltung der Rastelemente denkbar. Die Rastvorsprünge erstrecken sich bevorzugt senkrecht zur Erstreckungsebene der Lichtleitplatte und somit auf das Gehäuse zu bzw. in dieses hinein. Die Rastvorsprünge sind dabei bevorzugt umlaufend seitlich nach außen von den Stirnseiten der Lichtleitplatte beabstandet, um entsprechend in das die Lichtleitplatte seitlich umgebende Gehäuse im Wesentlichen senkrecht zur Erstreckungsebene einzugreifen und somit mit dem Gehäuse verbunden werden zu können. Grundsätzlich kann der Tragrahemn auch anders an dem Gehäuse befestigt werden (bspw. Kleben, Schrauben, Pressen, etc.).

Gemäß einer bevorzugten Ausgestaltungsform können die Rastvorsprünge über den Umfang des Tragrahmens verteilt in definierten Abständen bereitgestellt sein. Die entsprechenden Rastaufnahmen zur Aufnahme der Rastvorsprünge in dem Gehäuse sind dann bevorzugt ebenfalls an den definierten Positionen bereitgestellt. Grundsätzlich kann die Rastaufnahme auch durch eine einzige umlaufend geschlossene Ausnehmung (Nut oder dergleichen) ausgebildet sein, um die Aufnahme des Tragrahmens in dem Gehäuse zu erleichtern. Dies ist insbesondere bei rund ausgebildeten Leuchten von Vorteil. Wenn allerdings die Rastaufnahme für die Rastvorsprünge nicht umlaufend sondern nur lokal an vorbestimmten und mit den Rastvorsprüngen korrespondieren Bereichen bereitgestellt ist, kann mehr Material an dem Gehäuse bspw. zur Wärmeabfuhr bereitgestellt werden.

Gemäß einer bevorzugten Ausgestaltungsform kann der Tragrahmen ferner einen vorzugsweise umlaufend geschlossenen (alternativ auch umlaufend geschlitzten oder segmentartig aufgebauten) Stabilisierungssteg aufweisen, welcher sich bevorzugt senkrecht zur Erstreckungsebene der Lichtleitplatte in eine korrespondierende Stabilisierungsaufnahme des Gehäuses erstreckt. Dieser Stabilisierungssteg wirkt in der Weise mit der Stabilisierungsaufnahme zusammen, dass der Tragrahmen umlaufend stabilisiert wird, um der definierten Form des Gehäuses und insbesondere der Lichtleitplatte bzw. deren umlaufenden Stirnseite zu folgen, in der Weise, dass ein definierter Abstand zwischen Lichtleitplatte und Leuchtmittel bei der Ausrichtung der Lichtleitplatte mittels des Tragrahmens sicher erzielt werden kann.

In einer bevorzugten Ausgestaltungsform können sich von dem Stabilisierungssteg die vorbezeichneten Rastvorsprünge an den definierten Positionen erstrecken. Auf diese Weise kann bei gleicher Wirkung der Aufbau des Tragrahmens vereinfacht werden. Zudem können die Rastvorsprünge gleichzeitig zur Stabilisierung des Tragrahmens genutzt werden.

Gemäß einer weiteren Ausgestaltungsform ist dem Lichtleitelement in Lichtabstrahlrichtung der Leuchte bzw. des Lichtleitelements gesehen, also vorzugsweise der der Lichtabgabe der Lichtleitplatte dienenden flächigen Seite in Lichtabstrahlrichtung nachgeschaltet, eine Leuchtenabdeckung der Leuchte vorgesehen. Diese dient zum einen dem Schutz der Lichtleitplatte und der entsprechenden Leuchtmittel. Sie schafft also bevorzugt einen nach außen abgeschlossenen Raum. Andererseits kann die Leuchtabdeckung auch als weiteres Lichtbeeinflussungselement bereitgestellt sein; beispielsweise als Diffusor.

In einer bevorzugten Ausgestaltungsform kann die Leuchtenabdeckung das Leuchtengehäuse und/oder den Tragrahmen seitlich außen umgeben. Insbesondere in dieser Ausgestaltungsform kann die Leuchtenabdeckung Haltestrukturen aufweisen, welche in korrespondierende Haltestrukturen des Leuchtengehäuses bzw. des Tragrahmens eingreifen, um die Leuchtenabdeckung an dem Gehäuse bzw. dem Tragrahmen zu halten.

Somit kann insgesamt eine Leuchte mit Edge-Lit Technologie bereitgestellt werden, welche in einfacher Weise zusammensetzbar ist und gleichzeitig eine sichere und definierte Positionierung ihrer Lichtleitplatte bezüglich diese umgebender Leuchtmittel bereitstellt.

Gemäß einer weiteren Ausgestaltungsform können das Gehäuse und der Tragrahmen jeweils ein miteinander korrespondierendes Teil eines Kodierelements aufweisen, welche nur eine definierte Positionierung des Tragrahmens bezüglich des Gehäuses - insbesondere in Umfangsrichtung gesehen - zulassen. Auf diese Weise kann die Montage der Bauteile vereinfacht werden. Dieses ist insbesondere dann relevant, wenn aufgrund des Aufbaus der Leuchte beispielsweise ein bestimmtes Rastelement zuerst in eine entsprechende Rastaufnahme des Gehäuses einzuclipsen ist. Allgemein kann so ein falscher Einbau des Tragrahmens vermieden werden.

Weitere Vorteile und Ausgestaltungsbeispiele werden anhand der Figuren der begleitenden Zeichnungen im Folgenden beschrieben. Es zeigen:
- Figur 1: eine seitliche Schnittansicht einer erfindungsgemäßen Leuchte gemäß einer ersten Ausführungsform,
- Figur 2: eine Detailansicht der Leuchte gemäß Figur 1,
- Figur 3: eine Detailansicht einer erfindungsgemäßen Leuchte gemäß einer zweiten Ausführungsform,
- Figur 4: mehrere Ansichten eines erfindungsgemäßen Tragrahmens gemäß einer dritten Ausführungsform, und
- Figur 5: mehrere Ansichten eines erfindungsgemäßen Tragrahmens gemäß einer vierten Ausführungsform,

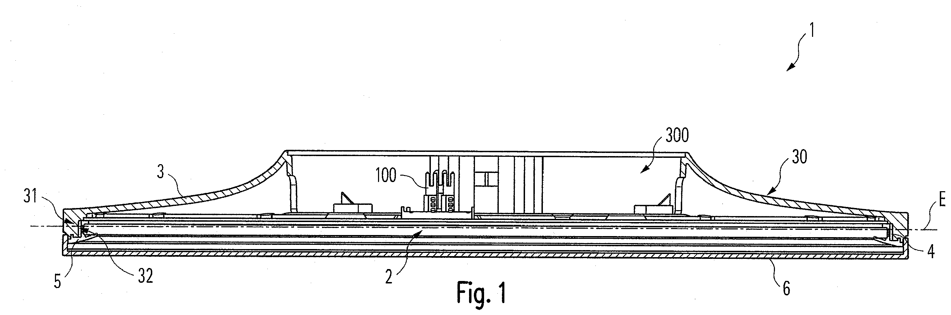

Figur 1 zeigt eine erfindungsgemäße Leuchte 1. Die erfindungsgemäße Leuchte 1 weist eine Lichtleitplatte 2 auf. Die Lichtleitplatte 2 wiederum weist eine seitlich umlaufende Stirnseite 20 auf. Die seitlich umlaufende Stirnseite 20 verbindet vorzugsweise zwei flächige Seiten 21, 22 der Lichtleitplatte 2. Eine der flächigen Seiten 22 bildet bevorzugt eine Lichtabstrahlfläche der Lichtleitplatte 2 bzw. der Leuchte 1. In der hier dargestellten Ausführungsform bildet die rückseitige Fläche 21 der Lichtleitplatte 2 keine Lichtabstrahlfläche. In einer anderen Ausgestaltungsform ist es jedoch denkbar, dass auch oder ausschließlich die rückseitige flächige Seite 21 wenigstens zum Teil eine Lichtabstrahlfläche bildet. Die Lichtleitplatte 2 weist eine Erstreckungsebene E auf, in welcher sich die Lichtleitplatte 2 im Wesentlichen flächig erstreckt. Bevorzugt verläuft die Stirnseite 20 in der Erstreckungsebene E. Die flächigen Seiten 21, 22 sind bevorzugt im Wesentlichen parallel zu der Erstreckungsebene E ausgerichtt. Die Lichtleitplatte 2 ist bevorzugt aus PMMA hergestellt. Die Erfindung ist hierauf selbstverständlich nicht beschränkt.

Die Lichtleitplatte 2 weist bevorzugt eine runde oder eckige (insbesondere viereckige) Form auf. Selbstverständlich ist die Erfindung nicht auf diese Formen beschränkt.

Des Weiteren weist die erfindungsgemäße Leuchte 1 ein Leuchtengehäuse 3 auf. Das Leuchtengehäuse 3 ist bevorzugt aus Metall, insbesondere Aluminium (bevorzugt als Druckguss-Aluminium-Gehäuse), hergestellt. Das Leuchtengehäuse 3 umgibt die Lichtleitplatte 2 wenigstens stirnseitig; also umgibt das Leuchtengehäuse 3 die Lichtleitplatte 2 wenigstens umlaufend um seine Stirnseite 20.

Das Leuchtengehäuse 3 kann sich, wie in Figur 1 dargestellt, beispielsweise rückseitig der Lichtleitplatte 2 - also auf der hier der Lichtabgabe dienenden flächigen Seite 22 gegenüberliegenden flächigen Seite 21 der Lichtleitplatte 2 - erstrecken. Dabei kann das Leuchtengehäuse 3 auf der besagten (Rück-)Seite 30 derart ausgebildet sein, dass es einen Aufnahmeraum 300 beispielsweise zur Aufnahme der Leuchtenelektronik 100 bildet. Auch können rückseitig des Leuchtengehäuses 3 Befestigungselemente vorgesehen sein, um die Leuchte 1 in Form einer Anbauleuchte oder auch einer Pendelleuchte mittels Tragseilen und dergleichen zu befestigen. Von dem rückseitigen Bereich 30 erstreckt sich das Leuchtengehäuse 3, wie in Figur 1 dargestellt, bevorzugt in einen ringförmigen Vorsprung 31, welcher eben die Lichtleitplatte 2 wenigstens stirnseitig und bevorzugt geschlossen umgibt.

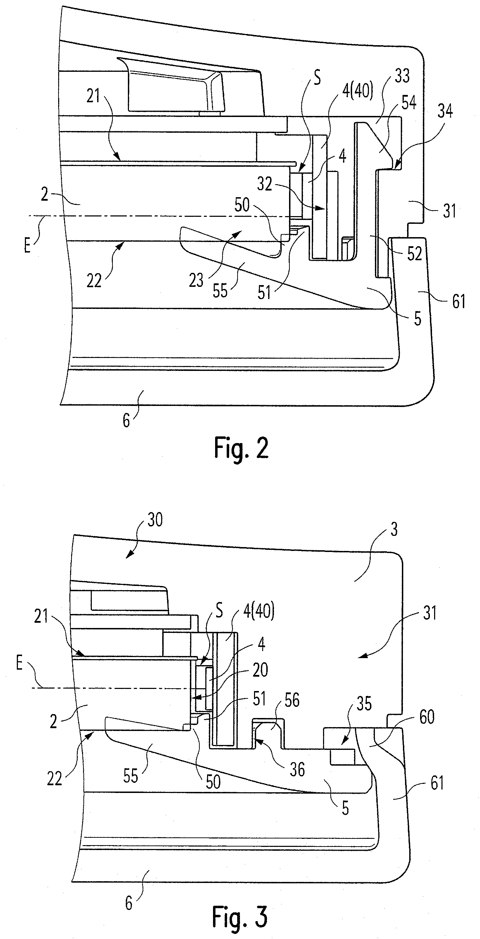

Zwischen der Stirnseite 20 und dem Leuchtengehäuse 3 (bzw. Vorsprung 31) sind Leuchtmittel 4 vorgesehen, die der Einkopplung von Licht in die Lichtleitplatte 2 dienen. Die Leuchtmittel 4 sind dabei insbesondere in Form von LEDs, insbesondere LEDs aufweisende Leuchtmodule 40, ausgebildet. Diese sind, wie insbesondere in den Figuren 2 und 3 zu erkennen, bevorzugt in einem Raum bzw. Spalt S vorgesehen, welcher zwischen der Stirnseite 20 der Lichtleitplatte 2 und der der Stirnseite 20 zugwandten Seite 32 des Gehäuses 3 gebildet ist.

In einer bevorzugten Ausgestaltungsform sind die Leuchtmittel 4 - also insbesondere die Leuchtmodule 40 - an dem Gehäuse 3 vorgesehen, insbesondere befestigt vorgesehen; beispielsweise an dem Gehäuse 3 verklebt. Zur definierten Positionierung der Leuchtmittel 4, 40 sind diese somit bevorzugt an der der Stirnseite 20 zugwandten Seite 32 des Gehäuses 3 vorgesehen.

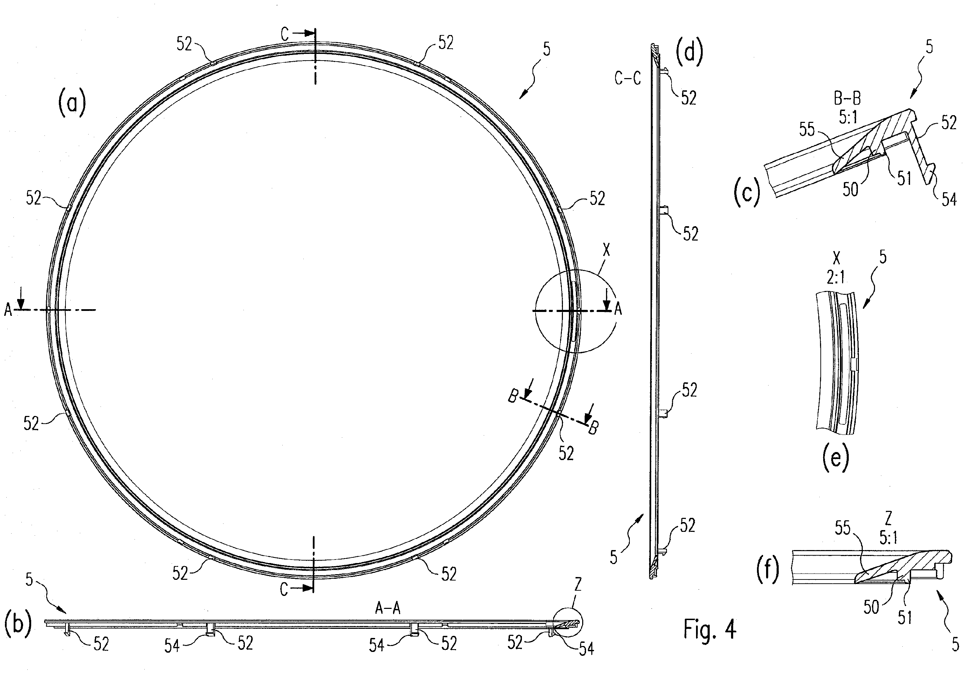

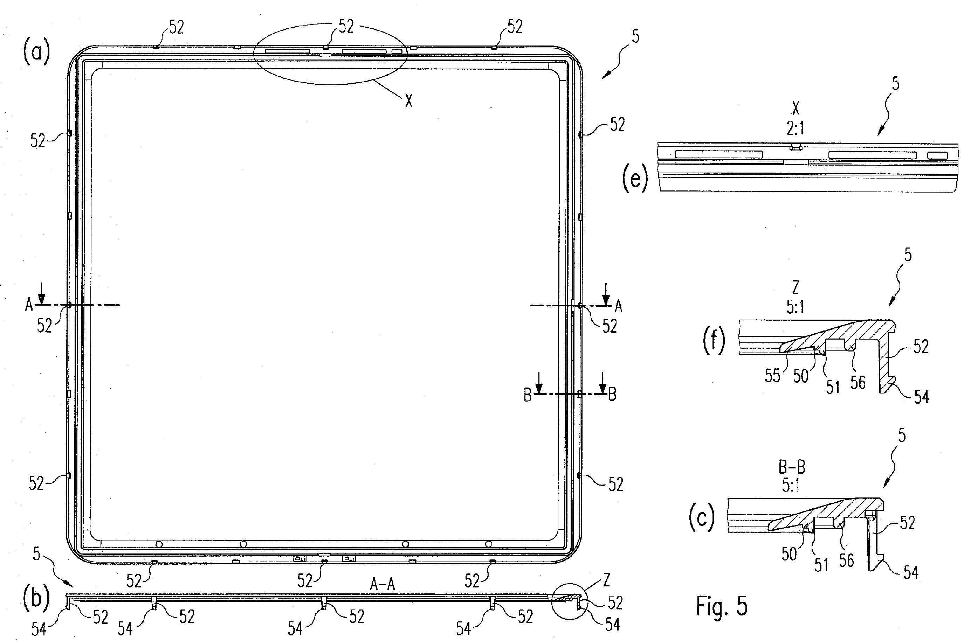

Insbesondere um die Lichtleitplatte 2 an dem Gehäuse 3 zu halten, weist die Leuchte 1 ferner einen ringförmigen Tragrahmen 5 auf. Der Tragrahmen 5 ist bevorzugt aus Kunststoff hergestellt und insbesondere als Spritzgussteil bereitgestellt. Der Tragrahmen 5 ist auch in den Figuren 4 und 5 gezeigt. In den Figuren 4 und 5 zeigt (a) eine Draufsicht auf den Tragrahmen 5, (b) eine Teilschnittansicht entlang Linie A-A aus (a), (c) eine Detail-Schnittansicht entlang Linie B-B aus (a), (d) eine Schnittansicht entlang Linie C-C aus (a) (nur in Figur 4), (e) eine Detailansicht X aus (a), und (f) eine Detailansicht Z aus (b). Die Figuren 4 bis 5 zeigen beispielhaft unterschiedliche geometrische Ausgestaltungsformen des Tragrahmens 5, die bevorzugt der Form der Leuchte 1 an sich entsprechen; also beispielsweise rund (Figur 4) oder viereckig (Figur 5) sein kann. Selbstverständlich sind auch andere Ausgestaltungsformen denkbar.

Der Tragrahmen 5 weist ein Abstandselement 50 auf, um die Lichtleitplatte 2 bezüglich aller Leuchtmittel 4 stirnseitig beabstandet zu positionieren. Mit anderen Worten ist der Tragrahmen 5 derart ausgebildet, dass er die Lichtleitplatte 2 sowohl am Gehäuse 3 hält, als auch derart bezüglich der Leuchtmittel 4, 40 positioniert, dass die Stirnseite 20 der Lichtleitplatte 2 zu allen Leuchtmitteln 4, 40 seitlich beabstandet ist und somit eine Beschädigung bzw. mechanische Beeinträchtigung der Leuchtmittel 4, 40 vermieden werden kann.

Gemäß einer bevorzugten Ausgestaltungsform ist das Abstandselement 50 umlaufend, vorzugsweise geschlossen umlaufend vorgesehen. Gemäß einer bevorzugten Ausgestaltungsform ist das Abstandselement 50 als vorzugsweise umlaufender Steg (Abstandssteg) ausgebildet. Wie insbesondere in den Figuren 2 und 3 zu entnehmen ist, erstreckt sich dieser Steg bevorzugt in den zwischen Stirnseite 20 und Gehäuse 3 ausgebildeten Spalt S, vorzugsweise zwischen Stirnseite 20 und Leuchtmodul 40. In einer bevorzugten Ausgestaltungsform liegt das Abstandselement 50 wenigstens seitlich, also mit der der Stirnseite 20 zugewandten Seite, an der Stirnseite 20 der Lichtleitplatte 2 an. Aufgrund der entsprechenden Ausgestaltung des Abstandselements 50 kann somit eine umlaufende Positionierung der Lichtleitplatte 2 erfolgen, so dass die Lichtleitplatte 2 in definierter Weise seitlich zu allen Leuchtmitteln 4, 40 beabstandet vorgesehen werden kann.

In einer besonders bevorzugten Ausgestaltungsform ist das Abstandselement 50 derart ausgebildet, um die Lichtleitplatte 2 bezüglich des Leuchtengehäuses 3 und insbesondere bezüglich der die Lichtleitplatte 2 bevorzugt umlaufend umgebenden Leuchtmittel 4 umlaufend zu zentrieren, wie beispielsweise Figur 1 zu entnehmen ist.

Der Tragrahmen 5 weist ferner ein Anlageelement 51 auf, um die Leuchtmittel 4, vorzugsweise die Leuchtmittel 4 tragenden Leuchtmodule 40, seitlich an das Gehäuse 3 zu drücken. Hierzu liegt das Anlageelement 51 bevorzugt seitlich, also in Richtung der Erstreckungsebene E der Lichtleitplatte 2 gesehen, an dem Leuchtengehäuse 3 bzw. dem Leuchtmodul 40 an. Ähnlich dem Abstandselement 50 kann auch das Anlageelement 51 als vorzugsweise umlaufender Steg (Anlagesteg) ausgebildet sein. Das Anlageelement bzw. der Anlagesteg 51 erstreckt sich bevorzugt in den zwischen Stirnseite 20 und Gehäuse 3 ausgebildeten Spalt S, vorzugsweise zwischen Stirnseite 20 und Leuchtmodul 40; dabei insbesondere bevorzugt wenigstens in Anlage mit dem Leuchtmodul 40.

Wie insbesondere den Figuren 2 und 3 zu entnehmen ist, können das Abstandselement 50 sowie das Anlageelement 51 integral ausgebildet sein; beispielsweise als integral ausgebildeter und von dem Tragrahmen 5 vorragender Steg. Dabei steht der Steg bevorzugt im Wesentlichen senkrecht zu einer Erstreckungsebene E der Lichtleitplatte 2 von dem Tragrahmen 5 vor, um bevorzugt sich in den Spalt S zu erstrecken, um somit insbesondere bevorzugt seitlich sowohl an der Stirnseite 20 als auch an dem Gehäuse 3 bzw. Leuchtmodul 40 anzuliegen. Auf diese Weise wird eine besonders effektive Ausrichtung des Lichtleitelements 2 bezüglich des umlaufenden Gehäuses 3 und insbesondere der Leuchtmittel 4, 40 erzielt. Zudem können auf diese Weise gleichzeitig die Leuchtmittel 4 bzw. die Leuchtmodule 40 bezüglich des Gehäuses 3 lagepositioniert werden, indem diese an das Gehäuse 3, insbesondere an die der Stirnseite 20 gegenüberliegende Seite 32 des Gehäuses 3 angedrückt werden. In einer derartigen Ausgestaltungsform kann ggf. auf eine zusätzliche Befestigung der Leuchtmittel 4 verzichtet werden.

Um den Tragrahmen 5 an dem Gehäuse 3 zu befestigen, gibt es zahlreiche Möglichkeiten. Eine besonders bevorzugte Möglichkeit besteht darin, dass der Tragrahmen 5 Rastvorsprünge 52 aufweist, welche sich insbesondere senkrecht zu der Erstreckungsebene E der Lichtleitplatte 2 von dem Tragrahmen 5 weg erstrecken; und zwar in eine Richtung zu dem Gehäuse 3 bzw. der Lichtleitplatte 2 hin - also hier in einer senkrechten Richtung gesehen. Die Rastvorsprünge 52 greifen bevorzugt in korrespondierende Rastaufnahmen 33 des Gehäuses 3 ein. Gemäß einer bevorzugten Ausgestaltungsform ist der Rastvorsprung 52 an seinem exponierten Ende mit einem Rasthaken 54 ausgebildet, welcher in einen entsprechenden Hinterschnitt 34 der Rastaufnahme 33 eingreift bzw. einschnappt.

Gemäß einer möglichen Ausgestaltungsform kann der Rastvorsprung 52 geschlossen umlaufend ausgebildet sein. Dementsprechend wäre auch die Rastaufnahme 33 geschlossen umlaufend ausgebildet, um den entsprechenden Rastvorsprung 52 aufzunehmen. Es ist bevorzugt jedoch auch denkbar, über den Umfang des Tragrahmens 5 (gleichmäßig) verteilt mehrere Rastvorsprünge 52 vorzusehen (vgl. Figur 4a mit acht Rastvorsprüngen 52; Figur 5a mit zwölf Rastvorsprüngen 52). Dabei kann die Rastaufnahme 33 umlaufend geschlossen ausgebildet sein. Bevorzugt weist das Gehäuse 3 in diesem Fall jedoch eine mit den Rastvorsprüngen 52 korrespondierende Anzahl und Positionierung von Rastaufnahmen 33 auf. Diese Ausgestaltungsform hat den Vorteil, dass mehr Material für das Gehäuse 3 bei gleichen Abmessungen bereitgestellt ist, um eine verbesserte Wärmeabfuhr zu gewährleisten. In diesem Fall dient das Gehäuse 3 bevorzugt auch als Kühlkörper. Die Wärmeabfuhr wird bevorzugt durch flächige Anlage des Leuchtmittels 4 bzw. Leuchtmoduls 40 auf dem Gehäuse 3 (insbesondere Vorsprung 31 bzw. Seite 32) gewährleistet.

Um die Lichtleitplatte 2 besonders sicher am Gehäuse 3 zu halten, weist der Tragrahmen 5 bevorzugt einen seitlich (nach innen) vorstehenden Tragsteg 55 auf. Dieser Tragsteg 55 ist bevorzugt derart ausgebildet, dass er sich über einen äußeren Peripheriebereich 23 der Lichtleitplatte 2 - insbesondere der flächigen Seite 22 für die Lichtabstrahlung - derart erstreckt, um eben die Lichtleitplatte 2 an dem Gehäuse 3 zu halten. Der vorstehende Tragsteg 55 ist dabei bevorzugt umlaufend und insbesondere umlaufend geschlossen ausgebildet. Dies ist aus optischen Aspekten vorteilhaft, um ein harmonisches Bild der nach unten exponierten Lichtabgabeseite der Lichtleitplatte 2 bereitzustellen. Insbesondere wird es mittels des Tragrahmens 5 somit auch ermöglicht, den vorbezeichneten Spalt S zwischen Lichtleitplatte 2 und Gehäuse 3 bzw. Leuchtmittel 4, 40 abzudecken. In einer besonders bevorzugten Ausgestaltungsform kann der Tragrahmen 5 entsprechend lackiert sein, um insgesamt ein harmonischeres Erscheinungsbild zu bewirken. Der Tragsteg 55 kann auch umlaufend geschlitzt oder segmentiert ausgebildet sein, wobei die Tragstegelemente dann bevorzugt als einzelne Federelemente ausgebildet sind. Gemäß einer bevorzugten Ausgestaltungsform ist der Tragsteg 55 flexibel ausgebildet. Auf diese Weise kann es ermöglicht werden, dass bei eingesetztem Tragrahmen 5 in das Gehäuse 3 die Lichtleitplatte 2 mittels des Tragstegs 55 (bzw. der Tragstegelemente) senkrecht zur Erstreckungsebene E der Lichtleitplatte 2 an das Gehäuse 3 gedrückt wird; hier insbesondere an die Rückseite 30 des Leuchtengehäuses 3. Mit anderen Worten wird somit die Lichtleitplatte 2 zwischen dem Tragrahmen 5 und dem Gehäuse 3 eingeklemmt bzw. eingespannt. Aufgrund der gleichzeitig vorgesehenen Abstandselemente 50 wird es ermöglicht, die Lichtleitplatte 2 bezüglich aller Leuchtmittel 4 stirnseitig bzw. seitlich beabstandet zu positionieren und somit eine Beschädigung der Leuchtmittel 4 durch die Lichtleitplatte 2 sicher zu vermeiden.

In einer bevorzugten Ausgestaltungsform kann der Tragrahmen 5 ferner einen vorzugsweise umlaufend geschlossenen Stabilisierungssteg 56 aufweisen. Dieser Stabilisierungssteg 56 erstreckt sich bevorzugt senkrecht zur Erstreckungsebene der Lichtleitplatte 2 - und auf diese zu - in eine(r) korrespondierende (vorzugsweise umlaufend geschlossene) Stabilisierungsaufnahme 36 des Gehäuses 3 hinein. Aufgrund des Stabilisierungssteges 56 durch Aufnahme in der Stabilisierungsaufnahme 36 wird es insbesondere ermöglicht, den Tragrahmen 5 nicht nur besonders sicher in dem Gehäuse 3 zu halten, sondern außerdem den Tragrahmen 5 auf sichere Weise der Form bzw. Kontur des Gehäuses 3 bzw. der Lichtleitplatte 2 anzupassen. Insbesondere bei einem aus Kunststoff hergestellten Tragrahmen 5 kann durch den vorbezeichneten Stabilisierungssteg 56 sicher erreicht werden, dass ein eventueller Verzug des Tragrahmens 5 ausgeglichen wird, da der Tragrahmen 5 in der definierten Stabilisierungsaufnahme 36 geführt vorgesehen ist.

Gemäß einer bevorzugten Ausgestaltungsform, wie in Figur 2 gezeigt, können sich von dem Stabilisierungssteg 56 die Rastvorsprünge 52 weg erstrecken. Praktisch kann dies derart bewerkstelligt werden, dass beispielsweise der Stabilisierungssteg 56 als ringförmig geschlossener Ring bzw. Steg an dem Tragrahmen 5 vorgesehen ist und sich an den definierten Positionen dieser Stabilisierungssteg 56 in die entsprechenden Rastvorsprünge 52 erstreckt. Eine Stabilisierung kann in diesem Bereich des Tragrahmens 5 dann zudem dadurch erreicht werden, dass der Rastvorsprung 52 in der entsprechenden Rastaufnahme 33 aufgenommen ist.

Wie insbesondere Figuren 1 bis 3 zu entnehmen ist, kann hier in einem unteren Bereich der Leuchte 1, also allgemein in Lichtabstrahlrichtung der Leuchte 1 bzw. des Lichtleitelements 2 gesehen, eine Leuchtenabdeckung 6 vorgesehen sein. Die Leuchtenabdeckung 6 ist dabei besonders bevorzugt der der Lichtabgabe der Lichtleitplatte 2 dienenden flächigen Seiten 22 in Lichtabstrahlrichtung nachgeschaltet. Die Leuchtenabdeckung 6 dient dabei insbesondere dem Schutz der Leuchtenkomponenten und hier insbesondere der Lichtleitplatte 2 und der Leuchtmittel 4, 40. Dabei dient die Leuchtenabdeckung 6 beispielsweise dem Schutz vor mechanischer Beeinflussung (also beispielsweise Berührung) sowie bei entsprechender Abdichtung gegebenenfalls auch dem Schutz vor Staub, als Spritzschutz und dergleichen.

Gemäß einer bevorzugten Ausgestaltungsform ist die Leuchtenabdeckung 6 derart ausgebildet, dass sie das Leuchtengehäuse 3 und/oder den Tragrahmen 5 seitlich außen umgibt. Die Leuchtenabdeckung 6 ist dann, wie in Figur 1 gezeigt, beispielsweise topf- bzw. schalenförmig ausgebildet, wobei der sich nach oben erstreckende Rand 61 seitlich um das Leuchtengehäuse 3 herumlegt und mit diesem bevorzugt in Anlage ist. Zwischen Leuchtenabdeckung 6 und Leuchtengehäuse 3 bzw. Tragrahmen 5 kann eine Dichtung (bspw. Ringschnurdichtung oder eine integral mit wenigstens einem der vorgenannten Bauteile ausgebildete Dichtlippe oder dergleichen) vorgesehen sein, um ein nach außen dichtes (staubdicht, wasserdicht, etc.) Leuchtengehäuse 3 bereitzustellen.

In einer bevorzugten Ausgestaltungsform kann, wie in Figur 3 gezeigt, die Leuchtenabdeckung 6 Haltestrukturen 60 aufweisen, welche in korrespondierender Haltestrukturen 35 des Leuchtengehäuses 3 bzw. des Tragrahmens 5 eingreifen, um letztlich die Leuchtenabdeckung 6 zu halten. Die Haltestrukturen 60 der Leuchtenabdeckung 6 können dabei beispielsweise als Prägung in der Leuchtenabdeckung 6 vorgesehen sein. Diese Prägungen stehen dann nach innen zu dem Leuchtengehäuse 3 vor und greifen bevorzugt in die vorbezeichneten korrespondierenden Haltestrukturen 35 ein. Auf diese Weise kann eine sichere und einfache Verbindung zwischen der Leuchtenabdeckung 6 einerseits und dem Rest der Leuchte 1 andererseits ermöglicht werden.

Somit kann insgesamt eine besonders einfache Leuchtenstruktur bereitgestellt werden, die ein einfaches Zusammensetzen einer entsprechenden erfindungsgemäßen Leuchte 1 ermöglicht, während gleichzeitig auf einfache Weise und beim Zusammensetzen automatisch die Lichtleitplatte 2 bezüglich aller Leuchtmittel 4 stirnseitig beabstandet positioniert werden kann.

Gemäß einer bevorzugten Ausgestaltungsform können das Gehäuse 3 und der Tragrahmen 5 jeweils ein miteinander korrespondierendes Teil eines Kodierelements (nicht dargestellt) aufweisen, welche nur eine definierte Positionierung des Tragrahmens 5 bezüglich des Gehäuses 3 zulassen. Auf diese Weise kann ein Fehleinbau des Tragrahmens 5 bezüglich des Gehäuses 3 vermieden werden.

Die Leuchtenabdeckung 6 kann auf unterschiedliche Weise ausgebildet sein. So kann sie beispielsweise als klare Abdeckung ausgebildet sein. Es ist jedoch auch denkbar, dass die Leuchtenabdeckung 6 auch zur Lichtbeeinflussung dient und beispielsweise in Form eines Diffusors bspw. opak bereitgestellt ist.

Neben den korrespondierenden Haltestrukturen 35,60 ist es zusätzlich oder alternativ denkbar, dass das Leuchtengehäuse 6 an der entsprechenden Auflagefläche mit dem Gehäuse 3 in andere Weise verbunden ist; beispielsweise verklebt.

Die vorliegende Erfindung ist auf die vorbeschriebenen Beispiele nicht beschränkt, sofern sie vom Gegenstand der folgenden Ansprüche erfasst ist. Insbesondere ist die vorliegende Erfindung nicht auf die beschriebenen Materialien oder auch die Form der Leuchte 1 beschränkt. Alle Merkmale der vorbeschriebenen Ausführungsbeispiele sind in beliebiger Weise mit- und untereinander kombinierbar.

## Patentansprüche

1. Leuchte (1) aufweisend:
- eine Lichtleitplatte (2) mit einer seitlich umlaufenden Stirnseite (20),
- ein wenigstens stirnseitig die Lichtleitplatte (2) umgebendes Leuchtengehäuse (3),
- zwischen der Stirnseite (20) und dem Leuchtengehäuse (3) vorgesehene Leuchtmittel (4) zur Einkopplung von Licht in die Lichtleitplatte (2), und
- einen ringförmigen Tragrahmen (5), welcher die Lichtleitplatte (2) an dem Leuchtengehäuse (3) hält
wobei der Tragrahmen (5) ein Abstandselement (50) aufweist, um die Lichtleitplatte (2) bezüglich aller Leuchtmittel (4) stirnseitig beabstandet zu positionieren, und
wobei der Tragrahmen (5) ein Anlageelement (51) aufweist, um die Leuchtmittel (4) seitlich an das Leuchtengehäuse (3) zu drücken.

2. Leuchte gemäß Anspruch 1, wobei das Abstandselement (50) umlaufend, vorzugsweise geschlossen umlaufend vorgesehen ist.

3. Leuchte gemäß einem der vorhergehenden Ansprüche, wobei das Abstandselement (50) ausgebildet ist, um die Lichtleitplatte (2) bezüglich des Leuchtengehäuses (3) umlaufend zu zentrieren.

4. Leuchte (1) gemäß einem der vorhergehenden Ansprüche, wobei die Leuchtmittel (4) an dem Leuchtengehäuse (3) vorgesehen, insbesondere befestigt sind, besonders bevorzugt an der der Stirnseite (20) zugewandten Seite (32) des Leuchtengehäuses (3).

5. Leuchte (1) gemäß einem der vorhergehenden Ansprüche, wobei das Abstandselement (50) als vorzugsweise umlaufend geschlossener Steg ausgebildet ist.

6. Leuchte (1) gemäß einem der vorhergehenden Ansprüche, wobei sich das Abstandselement (50) bzw. der Steg bevorzugt in einen Spalt (S) zwischen Stirnseite (20) und Leuchtengehäuse (3), vorzugsweise zwischen Stirnseite (20) und einem die Leuchtmittel (4) tragenden Leuchtmodul (40), erstreckt.

7. Leuchte (1) gemäß einem der vorhergehenden Ansprüche, wobei das Abstandselement (50) wenigstens seitlich an der Stirnseite (20) der Lichtleitplatte (2) anliegt.

8. Leuchte (1) gemäß einem der vorhergehenden Ansprüche, wobei der Tragrahmen (5) das Anlageelement (51) aufweist, um die Leuchtmittel (4) tragenden Leuchtmodule (40) seitlich an das Leuchtengehäuse (3) zu drücken, wobei das Anlageelement (51) besonders bevorzugt seitlich an dem Leuchtmodul (40) anliegt.

9. Leuchte (1) gemäß einem der vorhergehenden Ansprüche, wobei das Anlageelement (51) als vorzugsweise umlaufend geschlossener Steg ausgebildet ist, und/oder
wobei sich das Anlageelement (51) bzw. der Steg bevorzugt in einen Spalt (S) zwischen Stirnseite (20) und Leuchtengehäuse (3), vorzugsweise zwischen Stirnseite (20) und Leuchtmodul (40), erstreckt, und/oder
wobei das Anlageelement (51) wenigstens seitlich an dem Leuchtengehäuse (3), insbesondere an dem Leuchtmodul (40), anliegt, und/oder
wobei das Abstandselement (50) und das Anlageelement (51) integral ausgebildet sind, bevorzugt integral als Steg ausgebildet sind.

10. Leuchte (1) gemäß einem der vorhergehenden Ansprüche, wobei der Tragrahmen (5) einen seitlich vorstehenden und vorzugsweise umlaufend geschlossenen Tragsteg (55) aufweist, welcher sich bevorzugt über einen äußeren Peripheriebereich (23) der Lichtleitplatte (2) derart erstreckt, um die Lichtleitplatte (2) an dem Leuchtengehäuse (3) zu halten,
wobei der Tragsteg (55) vorzugsweise flexibel ausgebildet ist, um die Lichtleitplatte (2) senkrecht zur Erstreckungsebene (E) der Lichtleitplatte (2) an das Leuchtengehäuse (3) zu drücken, insbesondere in diese Richtung vorzuspannen.

11. Leuchte (1) gemäß einem der vorhergehenden Ansprüche, wobei der Tragrahmen (5) Rastvorsprünge (52) aufweist, welche in korrespondierende Rastaufnahmen (33) des Leuchtengehäuses (3) eingreifen,
wobei sich die Rastvorsprünge (52) vorzugsweise senkrecht zur Erstreckungsebene (E) der Lichtleitplatte (2) erstrecken.

12. Leuchte (1) gemäß einem der vorhergehenden Ansprüche, wobei der Tragrahmen (5) einen vorzugsweise umlaufend geschlossenen Stabilisierungssteg (56) aufweist, welcher sich bevorzugt senkrecht zur Erstreckungsebene (E) der Lichtleitplatte (2) in eine korrespondierende Stabilisierungsaufnahme (36) des Leuchtengehäuses (3) erstreckt.

13. Leuchte (1) gemäß Anspruch 11 und 12, wobei sich von dem Stabilisierungssteg (56) wenigstens einer, mehrere oder alle Rastvorsprünge (52) erstrecken.

14. Leuchte (1) gemäß einem der vorhergehenden Ansprüche, ferner aufweisend eine Leuchtenabdeckung (6), welche in Lichtabstrahlrichtung der Leuchte (1) bzw. Lichtleitplatte (2) gesehen, vorzugsweise einer der Lichtabgabe der Lichtleitplatte (2) dienenden flächigen Seite (22) in Lichtabstrahlrichtung nachgeschaltet, vorgesehen ist,
wobei vorzugsweise die Leuchtenabdeckung (6) das Leuchtengehäuse (3) und/oder den Tragrahmen (5) seitlich außen umgibt, und
wobei vorzugsweise die Leuchtenabdeckung (6) Haltestrukturen (60) aufweist, welche in korrespondierender Haltestrukturen (35) des Leuchtengehäuses (3) bzw. des Tragrahmens (5) eingreifen, um die Leuchtenabdeckung (6) zu halten.

15. Leuchte (1) gemäß einem der vorhergehenden Ansprüche, wobei das Leuchtengehäuse (3) und der Tragrahmen (5) jeweils ein miteinander korrespondierendes Teil eines Kodierelements aufweist, welche nur eine definierte Positionierung des Tragrahmens (5) bezüglich des Leuchtengehäuses (3) zulassen.

## Claims

1. A lamp (1) having:
- a light guide plate (2) with a laterally circumferential end face (20),
- a lamp housing (3) surrounding the light guide plate (2) at least on the end face,
- lighting means (4) provided between the end face (20) and the lamp housing (3) for coupling light into the light guide plate (2), and
- an annular support frame (5), which holds the light guide plate (2) on the lamp housing (3),
wherein the support frame (5) has a spacer element (50), in order to position the light guide plate (2) with regard to all lighting means (4) spaced apart on the end face, and
wherein the support frame (5) has a contact element (51), in order to press the lighting means (4) laterally onto the lamp housing (3).

2. A lamp according to claim 1, wherein the spacer element (50) is provided circumferentially, preferably closed circumferentially.

3. A lamp according to any one of the preceding claims, wherein the spacer element (50) is designed in order to center the light guide plate (2) circumferentially with regard to the lamp housing (3).

4. A lamp (1) according to any one of the preceding claims, wherein the lighting means (4) are provided, in particular, are mounted on the lamp housing (3), particularly preferably on the side (32) of the lamp housing (3) facing the end face (20).

5. A lamp (1) according to any one of the preceding claims, wherein the spacer element (50) is designed as a preferably circumferentially closed web.

6. A lamp (1) according to any one of the preceding claims, wherein the spacer element (50) or the web extends preferably into a gap (S) between end face (20) and lamp housing (3), preferably between end face (20) and a lighting module (40) supporting the lighting means (4).

7. A lamp (1) according to any one of the preceding claims, wherein the spacer element (50) abuts at least laterally against the end face (20) of the light guide plate (2).

8. A lamp (1) according to any one of the preceding claims, wherein the support frame (5) has the contact element (51), in order to press the lighting module (40) supporting the lighting means (4) laterally onto the lamp housing (3), wherein the contact element (51) abuts particularly preferably laterally against the lighting module (40).

9. A lamp (1) according to any one of the preceding claims, wherein the contact element (51) is designed as a preferably circumferentially closed web, and/or wherein the contact element (51) or the web extends preferably into a gap (S) between end face (20) and lamp housing (3), preferably between end face (20) and a lighting module (40), and/or
wherein the contact element (51) abuts at least laterally against the lamp housing (3), in particular, against the lighting module (40), and/or
wherein the spacer element (50) and the contact element (51) are integrally formed, preferably are integrally formed as a web.

10. A lamp (1) according to any one of the preceding claims, wherein the support frame (5) has a laterally protruding and preferably circumferentially closed support web (55), which preferably extends over an outer peripheral region (23) of the light guide plate (2) in such a manner as to hold the light guide plate (2) on the lamp housing (3),
wherein the support web (55) is preferably designed in a flexible manner, in order to press the light guide plate (2) perpendicularly to the extension plane (E) of the light guide plate (2) onto the lamp housing (3), in particular to pre-tension it in this direction.

11. A lamp (1) according to any one of the preceding claims, wherein the support frame (5) has latching projections (52), which engage in corresponding latching recesses (33) of the lamp housing (3),
wherein the latching projections (52) preferably extend perpendicularly to the extension plane (E) of the light guide plate (2).

12. A lamp (1) according to any one of the preceding claims, wherein the support frame (5) has a preferably circumferentially closed stabilizing web (56), which extends preferably perpendicularly to the extension plane (E) of the light guide plate (2) into a corresponding stabilizing recess (36) of the lamp housing (3).

13. A lamp (1) according to Claim 11 and 12, wherein at least one, several or all latching projections (52) extend from the stabilizing web (56).

14. A lamp (1) according to any one of the preceding claims, furthermore having a lamp cover (6), which, viewed in the light-emission direction of the lamp (1) or light guide plate (2), is provided, preferably downstream of a flat side (22) serving the light output of the light guide plate (2) in the light emission direction,wherein preferably the lamp cover (6) surrounds the lamp housing (3) and/or the support frame (5) laterally on the outside, and
wherein preferably the lamp cover (6) has retaining structures (60), which engage in corresponding retaining structures (35) of the lamp housing (3) or the support frame (5), in order to hold the lamp cover (6).

15. A lamp (1) according to any one of the preceding claims, wherein the lamp housing (3) and the support frame (5) each has a part of a coding element corresponding with each other, which permit only one defined positioning of the support frame (5) with respect to the lamp housing (3).

## Revendications

1. Lampe (1), présentant :
- une plaque de guidage de lumière (2) avec un côté frontal (20) périphérique latéral,
- un boîtier de lampe (3) entourant la plaque de guidage de lumière (2) au moins sur le côté frontal,
- des moyens d'éclairage (4) prévus entre le côté frontal (20) et le boîtier de lampe (3) pour le couplage de lumière dans la plaque de guidage de lumière (2), et
- un cadre porteur (5) de forme annulaire, lequel retient la plaque de guidage de lumière (2) sur le boîtier de lampe (3), le cadre porteur (5) présentant un élément d'espacement (50) pour positionner la plaque de guidage de lumière (2) à distance côté frontal par rapport à tous les moyens d'éclairage (4), et
le cadre porteur (5) présentant un élément d'appui (51) pour presser les moyens d'éclairage (4) latéralement sur le boîtier de lampe (3).

2. Lampe selon la revendication 1, l'élément d'espacement (50) étant prévu de façon périphérique, de préférence de façon périphérique de manière fermée.

3. Lampe selon l'une des revendications précédentes, l'élément d'espacement (50) étant constitué pour centrer de façon périphérique la plaque de guidage de lumière (2) par rapport au boîtier de lampe (3).

4. Lampe (1) selon l'une des revendications précédentes, les moyens d'éclairage (4) étant prévus, en particulier étant fixés, sur le boîtier de lampe (3), de façon particulièrement préférée sur le côté (32) du boîtier de lampe (3) qui est tourné vers le côté frontal (20).

5. Lampe (1) selon l'une des revendications précédentes, l'élément d'espacement (50) étant constitué en tant que nervure fermée de préférence de façon périphérique.

6. Lampe (1) selon l'une des revendications précédentes, l'élément d'espacement (50) ou respectivement la nervure s'étendant de préférence dans un interstice (S) entre le côté frontal (20) et le boîtier de lampe (3), de préférence entre le côté frontal (20) et un module d'éclairage (40) portant les moyens d'éclairage (4).

7. Lampe (1) selon l'une des revendications précédentes, l'élément d'espacement (50) étant adjacent, au moins latéralement, au côté frontal (20) de la plaque de guidage de lumière (2).

8. Lampe (1) selon l'une des revendications précédentes, le cadre porteur (5) présentant l'élément d'appui (51) pour presser latéralement contre le boîtier de lampe (3) les modules d'éclairage (40) portant des moyens d'éclairage (4), l'élément d'appui (51) étant adjacent au module d'éclairage (40) en particulier de préférence latéralement.

9. Lampe (1) selon l'une des revendications précédentes, l'élément d'appui (51) étant constitué en tant que nervure fermée de préférence de façon périphérique, et/ou
l'élément d'appui (51) ou respectivement la nervure s'étendant de préférence dans un interstice (S) entre le côté frontal (20) et le boîtier de lampe (3), de préférence entre le côté frontal (20) et le module d'éclairage (40), et/ou
l'élément d'appui (51) étant adjacent au moins latéralement au boîtier de lampe (3), en particulier au module d'éclairage (40), et/ou
l'élément d'espacement (50) et l'élément d'appui (51) étant constitués d'un seul tenant, étant de préférence constitués d'un seul tenant en tant que nervure.

10. Lampe (1) selon l'une des revendications précédentes, le cadre porteur (5) présentant une nervure de support (55) faisant saillie latéralement et de préférence fermée de façon périphérique, laquelle s'étend de préférence sur une zone périphérique (23) extérieure de la plaque de guidage de lumière (2) pour de la sorte retenir la plaque de guidage de lumière (2) sur le boîtier de lampe (3),
la nervure de support (55) étant de préférence constituée de façon flexible pour presser la plaque de guidage de lumière (2) perpendiculairement au plan d'extension (E) de la plaque de guidage de lumière (2) contre le boîtier de lampe (3), en particulier pour la pré-contraindre dans cette direction.

11. Lampe (1) selon l'une des revendications précédentes, le cadre porteur (5) présentant des saillies d'encliquetage (52), lesquelles s'engagent dans des logements d'encliquetage (33) correspondants du boîtier de lampe (3),
les saillies d'encliquetage (52) s'étendant de préférence perpendiculairement au plan d'extension (E) de la plaque de guidage de lumière (2).

12. Lampe (1) selon l'une des revendications précédentes, le cadre porteur (5) présentant une nervure de stabilisation (56) de préférence fermée de façon périphérique, laquelle s'étend de préférence perpendiculairement au plan d'extension (E) de la plaque de guidage de lumière (2) dans un logement de stabilisation (36) correspondant du boîtier de lampe (3).

13. Lampe (1) selon les revendications 11 et 12, au moins une, plusieurs ou toutes les saillies d'encliquetage (52) s'étendant à partir de la nervure de stabilisation (56).

14. Lampe (1) selon l'une des revendications précédentes, présentant en outre un recouvrement de lampe (6), lequel est, vu dans la direction d'émission de lumière de la lampe (1) ou respectivement de la plaque de guidage de lumière (2), prévu de préférence en aval d'un côté (22) à plat servant à l'émission de lumière de la plaque de guidage de lumière (2) dans la direction d'émission de lumière,
de préférence le recouvrement de lampe (6) entourant latéralement extérieurement le boîtier de lampe (3) et/ou le cadre porteur (5),
de préférence le recouvrement de lampe (6) présentant des structures de retenue (60), lesquelles s'engagent dans des structures de retenue (35) correspondantes du boîtier de lampe (3) ou respectivement du cadre porteur (5) pour retenir le recouvrement de lampe (6).

15. Lampe (1) selon l'une des revendications précédentes, le boîtier de lampe (3) et le cadre porteur (5) présentant respectivement une partie d'un élément de codage qui se correspondent réciproquement et ne permettent qu'une position définie du cadre porteur (5) par rapport au boîtier de lampe (3) .
